# EUROPEAN PATENT APPLICATION

(11) **EP 1 837 142 A1**
(43) Date of publication of application: **26.09.2007**
(21) Application number: 07103305.4
(22) Date of filing: 01.03.2007
(51) Int. Cl.: B27B 27/08

(54) **Miter Saw**

(30) Priority: 20.03.2006 US 783987 P
(71) Applicant: Black & Decker, Inc., Newark, DE 19711 (US)
(72) Inventor: Ayala, Adan, Baltimore, MD 21212 (US); Ceroll, Warren, Owings Mills, MD 21117 (US)
(74) Representative: Bell, Ian Stephen

(57) **Abstract**

A miter saw (10) has a base assembly (12), a table assembly (13) rotatably attached to the base assembly (12), and a drive assembly pivotally attached to the table assembly (13). The drive assembly has a motor (17) and a blade (14) driven by the motor. The miter saw (10) also has a fence assembly (20) attached to the base assembly (12). The fence assembly (20) has a workpiece supporting surface for supporting a workpiece (W) and a movable member (61,63C,64B,65W,66F) for moving the workpiece (W) off the workpiece supporting surface.

## Description

This specification relates to miter saws and more specifically to fine-adjust miter mechanisms for such miter saws.

A miter saw typically has the capacity to crosscut work pieces placed against its horizontal table and vertical fence. This saw can be rotated to make vertical cuts through a work piece at various angles relative to the fence. A vertical cut is known as a "miter cut."

A compound miter saw has the capability to tilt the blade (counterclockwise) to an angle relative to the table, generally from 0 degrees to 45 degrees left of vertical. A cut made with the blade tilted at an angle (and perpendicular to the fence) is known as a "bevel cut." A cut made with the blade set to both an angle relative to the fence (miter angle) and an angle relative to the base (bevel angle) is known as a "compound cut."

A dual bevel compound miter saw has the added capacity to tilt the blade to an angle relative to the table generally from 45 degrees left of vertical to 45 degrees right of vertical. This arrangement allows for more "compound cut" variations.

A slide miter saw has the saw component mounted to a rail system allowing it to slide backward and forward thereby increasing the saw's cutting capacities. The slide mechanisms are typically added to a compound saw.

Miter saws typically include a detent system that allows the table and the attached cutting tool to be preset to specific angles relative to the fixed fence. A detent system provides an accurate means to preset and reset the saw to make the most popular cuts. A miter saw typically provides 10 to 12 preset detent positions or recesses.

The typical miter saw table includes a rotating disc-like work surface that is supported by the tools' base. The table includes a support member for a lock handle in the front and a saw mounting area to the rear, behind the fence. In addition, a spring-loaded retractable detent pin or wedge is mounted in the handle area. The base typically has a rounded front shape that is concentric with its table and includes detent holes or slots positioned to accept the above-mentioned pin or wedge. The locking handle moves to create pressure against the rounded front of the base outside of the detent slot or hole locations. The lock handle may be of a rotating screw-type or lever cam-type design. In order to indicate the saw's preset cutting position, the rotating table supports a pointer that relates to an angle scale on the fixed base.

In using a detent system to preset the miter cut angle, the user would first loosen the lock handle, and retract the detent pin or insert. This would be followed by rotating the table, releasing the detent pin or insert into a desired slot or recess, and relocking the handle.

If a user wants to preset the miter saw for an angle cut not provided by the detent system, he would allow the spring-loaded pin or insert to rest against the front surface of the base outside of the detent slots and tighten the locking handle. For these cuts, the user must use the locking handle to hold the saw's position. Due to the interaction between the lever and the detent, however, the prior art arrangements do not allow for a fine adjustment that is near one of the predetermined detent positions.

It is thus desirable to provide a miter saw with a fine-adjustment mechanism whereby the user can quickly and easily make slight adjustments to the angle of cut. Several solutions have been attempted, as shown in US Patent Published Application Nos. 20040154448 and 20050262984. However, such solutions require many parts, which add cost to the miter saw, as well as increase the assembly time.

A miter saw including a base assembly, a table assembly rotatably attached to the base assembly, a drive assembly pivotally attached to the table assembly, the drive assembly including a motor and a blade driven by the motor, and a fence assembly attached to the base assembly and having a workpiece supporting surface for supporting a workpiece, where the fence assembly has a movable member for moving a workpiece off the workpiece supporting surface.

Additional features and benefits of the present invention are described, and will be apparent from, the accompanying drawings and the detailed description below.

The accompanying drawings illustrate preferred embodiments according to the practical application of the principles thereof, and in which:
FIG. 1 is an exemplary miter saw incorporating the invention.
FIG. 2 is a partial perspective view of an embodiment of a fine-adjust assembly according to the invention.
FIG. 3 is a partial top plan view of the first embodiment.
FIG. 4 is a partial cross-sectional view of an alternate embodiment of a fine-adjust assembly according to the invention.
FIG. 5 is a partial top plan view of an additional embodiment of a fine-adjust assembly according to the invention.
FIG. 6 is a partial perspective view of an alternate embodiment of a fine-adjust assembly according to the invention.
FIG. 7 is a partial cross-sectional view of an additional embodiment of a fine-adjust assembly according to the invention.

The present invention will now be described more fully hereinafter. This invention may, however, be embodied in many different forms and should not be construed as limited to the embodiments set forth herein; rather, these embodiments are provided so that this disclosure will be thorough and complete, and will fully convey the scope of the invention to those skilled in the art.

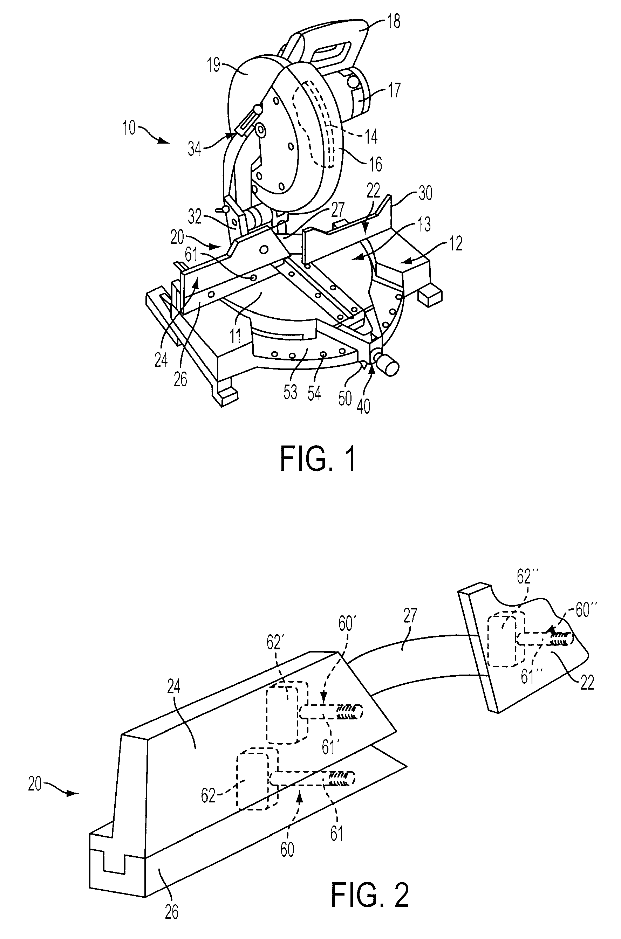

In FIG. 1, an exemplary compound miter saw according to the present invention is designated generally by the reference numeral 10. The compound miter saw 10 preferably includes a base assembly 12, an angularly movable turntable or table assembly 13 pivotally attached to base assembly 12, an angularly movable trunnion assembly 32 pivotally attached to table assembly 13, and a saw assembly 34 pivotally attached to trunnion assembly 32. Saw assembly 34 may include blade 14, a motor 17 driving blade 14, an upper blade guard 19 supporting motor 17, and a lower blade guard 16 pivotally attached to upper blade guard 19. The housing of motor 17 and/or upper blade guard 19 may support a handle 18.

As mentioned above, the table assembly 13 is preferably secured to the base assembly 12 such that it can be rotated in order to provide adjustment for miter cutting of a workpiece. The rotation of the table assembly 13 changes the angle of saw blade 14 relative to the fence assembly 20, which is preferably attached to base assembly 12, but maintains the perpendicularity of the plane of the saw blade 14 with the table assembly 13. A locking mechanism 40 can be activated in order to lock the table assembly 14 to the base assembly 12 at a desired miter-cutting position, as is well known in the art. Persons skilled in the art are referred to US Patent No. 6,810,780, which is hereby fully incorporated herein by reference, for further information on an exemplary miter locking mechanism 40.

As is conventional in this type of equipment, a fence assembly, indicated generally by reference numeral 20, is interconnected with the base assembly 12 and extends laterally across the table assembly 13, against which a workpiece can be fixedly positioned and supported for performing a cutting operation thereon. The fence assembly 20 preferably includes a fixed fence portion 22 and a movable fence portion 24, with the fixed and movable fence portions 22 and 24, respectively, extending in a mutually aligned lateral direction, with the movable fence portion 24 being laterally spaced away from the fixed fence portion 22. Such lateral spacing or gap between the fixed and movable fence portions 22 and 24, respectively, provides clearance for the saw blade to perform a cutting operation completely through the workpiece, regardless of the mode or type of cutting operating being performed. Preferably, the movable fence portion 24 is laterally movable toward and away from the fixed fence portion 22 in order to allow the operator to selectively adjust the clearance gap therebetween and thus accommodate the particular cutting operation being performed.

Movable fence portion 24 may be supported by a fence-supporting portion 26 of the base assembly 12. The fence-supporting portion 26 can be a separate component, fixedly secured to the assembly base 12, or it can be an integral portion of the fixed fence 22, with an interconnecting portion 27 extending laterally across the clearance gap, behind the fixed and movable fences to the opposite side of the saw blade to interconnect with the fixed fence 22, without interfering with the complete cutting of the workpiece. In either arrangement, the fence-supporting portion 26 may be fixedly secured to, or interconnected with, the base 12 and is preferably mutually aligned in a laterally-extending direction with the fixed fence portion 22.

Movable fence portion 24 is preferably movable relative to fence-supporting portion 26. Once the desired position of the movable fence portion 24 is obtained, it can be clamped in place, as it is well known in the prior art.

Persons skilled in the art are referred to US Patent No. 6,899,005, which is hereby fully incorporated by reference, for further information on fence assembly 20.

Miter saw 10 may also include a miter detent override mechanism. Persons skilled in the art are referred to US Patent No. 6,810,780, which is hereby fully incorporated herein by reference, for further information on an exemplary miter override mechanism. Preferably, such a miter detent override mechanism comprises a detent spring (not shown) and a detent override lever 50 attached to the detent spring. Persons skilled in the art are referred to US Patent No. 6,810,780, which is hereby fully incorporated herein by reference, for further information on an exemplary miter detent override mechanism.

The detent spring is typically secured to table assembly 14 using a pair of bolts that extend through apertures formed in the detent spring. The detent spring may be a generally U-shaped spring which includes a formed detent on the connecting leg of the U, and is preferably normally positioned such that the detent is biased into one of the detent slots 54 disposed on table assembly 14 or on a detent plate 53 attached to table assembly 14 to releasably position support table assembly 14 with respect to base assembly 12 at one of the more common miter angles defined by detent slots 54. With such arrangement, the user can move lever 50, disengaging the detent from the detent slot 54, allowing the user to rotate the table assembly 14 relative to base assembly 12, roughly changing the miter angle, i.e., the angle of blade 14 relative to fence assembly 20 and/or a workpiece.

It is desirable to provide a mechanism for finely adjusting the effective miter angle, i.e., the angle of blade 14 relative to a workpiece. Referring to FIGS. 1-3, fine-adjust assembly 60 may include a screw 61 threadingly engaging fence-supporting portion 26, and a knob 62 for rotating bolt 61. Preferably, screw 61 can be moved from a first position behind a workpiece-supporting plane FP of fence assembly 20 to a second position in front of such workpiece-supporting plane FP. In the second position, screw 61 will slightly move workpiece W, changing the effective miter angle between workpiece W and blade 14. Persons skilled in the art will recognize that fine-adjust assembly 60 may be disposed on the movable fence portion 24 and/or fixed fence portion 22 (respectively shown in FIG. 2 as 60' and 60", where like numerals refer to like parts).

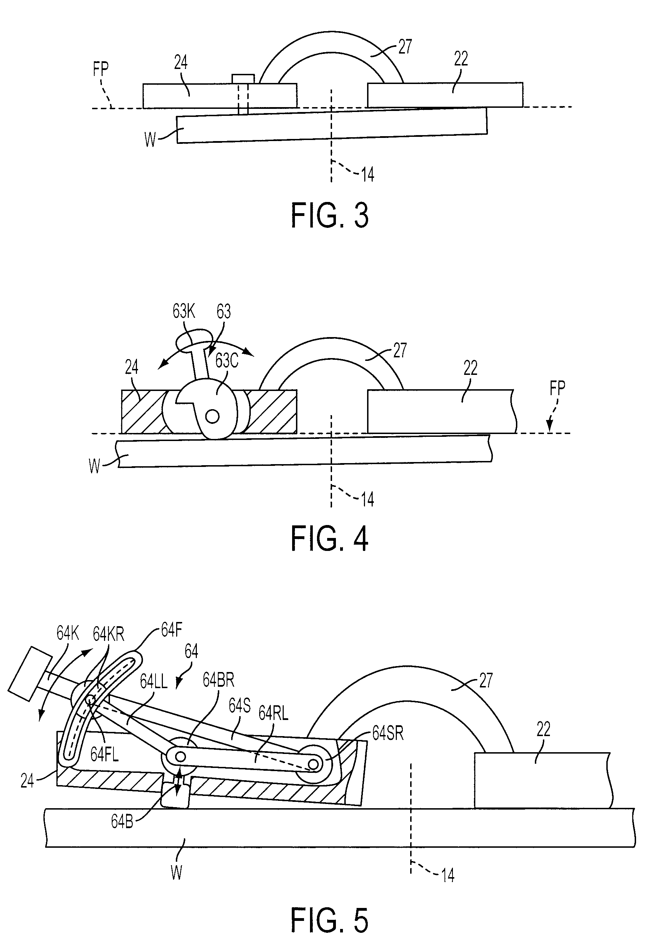

FIG. 4 illustrates an alternative embodiment of a fine-adjust assembly. The teachings of the previous embodiment are hereby incorporated by reference. Fine-adjust assembly 63 preferably has a cam 63C pivotally attached to movable fence portion 24. Cam 63C may be pivoted by a knob 63K. Persons skilled in the art will recognize that knob 63K may be disposed as shown, or may be disposed so that it rotates about the axis of rotation of cam 63C. By rotating cam 63C, cam 63C slightly moves workpiece W off movable fence portion 24, changing the effective miter angle between workpiece W and blade 14. Persons skilled in the art will recognize that fine-adjust assembly 63 may be disposed on the fence-supporting portion 26 and/or fixed fence portion 22.

FIG. 5 illustrates an alternative embodiment of a fine-adjust assembly. The teachings of the previous embodiments are hereby incorporated by reference. Fine-adjust assembly 64 preferably has a knob 64K attached to a knob roller 64KR. A shaft 64S is preferably attached to knob roller 64KR at one end and to roller 64SR at the other end. Roller 64SR is preferably pivotably attached to movable fence portion 24. A first link 64LL may be pivotably attached to knob roller 64KR at one end and to bumper roller 64BR at another end. A second link 64RL may be pivotably attached to roller 64SR at one end and to bumper roller 64BR at another end. Preferably bumper 64B is attached to bumper roller 64BR.

With such arrangement, the user can rotate knob 64R, causing bumper roller 64BR to rotate about roller 64SR. This rotational action of bumper roller 64BR relative to roller 64SR causes bumper 64B to move. Because movable fence portion 24 has a channel restricting the movement direction of bumper 64B, it preferably can only move along a substantially straight line. Accordingly, bumper 64B slightly moves workpiece W off movable fence portion 24, changing the effective miter angle between workpiece W and blade 14. Persons skilled in the art will recognize that fine-adjust assembly 63 may be disposed on the fence-supporting portion 26 and/or fixed fence portion 22.

Persons skilled in the art will recognize that the location of bumper 64B can be fixed by several means, including, for example, providing a flange 64F having a slot along which knob roller 64KR travels. The position of knob roller 64KR can be fixed by rotating a lock 64FL.

Persons skilled in the art shall also recognize that knob 64K can be directly attached to bumper roller 64BR, bumper 64B and/or link 64RL.

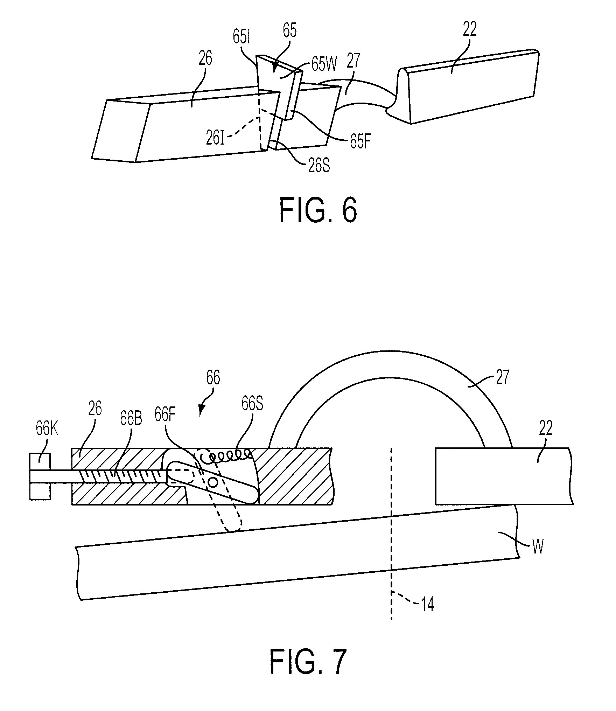

FIG. 6 illustrates an alternative embodiment of a fine-adjust assembly. The teachings of the previous embodiments are hereby incorporated by reference. Fine-adjust assembly 65 preferably has a wedge 65W that moves along a slot 26S in fence-supporting portion 26. Slot 26S may have an inclined surface 26l, that contacts an inclined surface 65l on wedge 65W. As wedge 65W is moved downwardly workpiece-contacting surface 65F moves farther away from the fence plane, thus slightly moving a workpiece off fence-supporting portion 26 and changing the effective miter angle between the workpiece and blade 14. Persons skilled in the art will recognize that fine-adjust assembly 65 may be disposed on the movable fence portion 24 and/or fixed fence portion 22.

FIG. 7 illustrates an additional embodiment of a fine-adjust assembly. The teachings of the previous embodiments are hereby incorporated by reference. Fine-adjust assembly 66 preferably has a tab 66F pivotally attached to fence-supporting portion 26. Tab 66F may be rotated by a bolt 66B threadingly engaging fence-supporting portion 26. Bolt 66B is preferably rotated via knob 66K. As tab 66F is rotated outwardly, it slightly moves a workpiece W off fence-supporting portion 26 and changing the effective miter angle between the workpiece W and blade 14. Persons skilled in the art will recognize that fine-adjust assembly 66 may be disposed on the movable fence portion 24 and/or fixed fence portion 22. Preferably, a spring 66S is disposed between tab 66F and fence-supporting portion 26 to return tab 66F to its original position.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. A miter saw comprising:
a base assembly;
a table assembly rotatably attached to the base assembly; and
a drive assembly pivotally attached to the table assembly, the drive assembly including a motor and a blade driven by the motor; and
a fence assembly attached to the base assembly and having a workpiece supporting surface for supporting a workpiece;
wherein the fence assembly has a movable member for moving the workpiece off the workpiece supporting surface.

2. The miter saw of Claim 1, wherein the fence assembly has a fixed fence attached to the base assembly.

3. The miter saw of Claim 2, wherein the movable member is a screw extending through the fixed fence.

4. The miter saw of Claim 2, wherein the movable member is a cam extending through the fixed fence.

5. The miter saw of Claim 2, wherein the movable member is a wedge extending through the fixed fence.

6. The miter saw of Claim 2, wherein the movable member is a tab extending from the fixed fence.

7. The miter saw of Claim 1, wherein the movable member is a screw extending through the fence assembly.

8. The miter saw of Claim 1, wherein the movable member is a cam extending through the fence assembly.

9. The miter saw of Claim 1, wherein the movable member is a wedge extending through the fence assembly.

10. The miter saw of Claim 1, wherein the movable member is a tab extending through the fence assembly.
